# FASCICULE DE BREVET EUROPEEN

(11) **EP 3 980 371 B1**
(45) Date de publication et mention de la délivrance du brevet: **06.09.2023**
(21) Numéro de dépôt: 20743762.5
(22) Date de dépôt: 01.06.2020
(51) Int. Cl.: C01B 3/06, C01B 3/08

(54) **COMPOSITION À BASE DE POUDRE DE SILICIUM POUR LA PRODUCTION D'HYDROGÈNE**
SILICIUMPULVERZUSAMMENSETZUNG ZUR HERSTELLUNG VON WASSERSTOFF
SILICON POWDER COMPOSITION FOR HYDROGEN PRODUCTION

(30) Priorité: 05.06.2019 FR 1905974
(43) Date de publication de la demande: 13.04.2022
(73) Titulaire: SUNERGY, 93110 Rosny-sous-Bois (FR)
(72) Inventeur: FOURGEOT, Fabrice, 94120 Fontenay-sous-Bois (FR); MIRHASHEMI HAGHIGHI, Shadi, 93110 Rosny-sous-Bois (FR)
(74) Mandataire: Stona, Daniel
(86) Numéro de dépôt international: PCT/IB2020/055174
(87) Numéro de publication internationale: WO 2020/245719

(56) Documents cités:
- WO-A1-2011/048685
- WO-A1-2018/037818
- DE-U1-202013 011 124
- US-A1- 2012 148 486
- US-A1- 2015 321 911

## Description

La présente invention concerne le domaine de la production d'hydrogène.

Elle est plus particulièrement relative aux procédés de production d'hydrogène par décomposition de l'eau sous l'action de métaux ou métalloïdes.

### Arrière-plan de l'invention

Dans le cadre de l'évolution vers une limitation de l'emploi des sources d'énergie fossiles et polluantes, l'hydrogène se présente comme l'une des solutions disponibles, en raison de sa qualité d'énergie décarbonée, dès lors que sa production ne fait pas appel à une utilisation importante d'énergie fossile.

La combustion de l'hydrogène libère 120 MJ/kg soit 2,5 fois celle de l'essence, à 47,3 MJ/kg. Un système combinant une pile à combustible et un stockage d'hydrogène peut fournir jusqu'à 2 à 3 fois l'énergie spécifique d'une batterie Liion.

Cependant la masse volumique de l'hydrogène est très faible (0,09 g/l) et impose un stockage sous forme comprimée ou liquide pour son transport (exception étant faite des usages industriels de l'hydrogène qui utilisent des pipe-lines). Sous 700 bars, un volume de 38 litres est nécessaire pour stocker 1 kg d'hydrogène, soit 26 kg H₂/m³. Le coût du stockage à haute pression reste élevé et les consignes de sécurité vis-à-vis de telles pressions sont contraignantes.

Des solutions alternatives ont été proposées pour le stockage de l'hydrogène sous forme "solide" : boranes, hydrures métalliques, métaux, etc.

L'utilisation de métaux décomposant l'eau sous l'action d'un acide ou d'une base, en produisant de l'hydrogène, est connue depuis longtemps.

L'aluminium a été très étudié en raison d'une faible stabilité en présence d'eau et d'un rapport masse hydrogène / masse métal élevé.

Le silicium partage des caractéristiques assez similaires, mais offre un rapport masse H₂ / masse métal plus élevé (14,3ô contre 11%). Par ailleurs, le silicium est beaucoup plus abondant dans la croûte terrestre que l'aluminium, soit 27% contre 8%, et moins coûteux que l'aluminium par kilogramme d'hydrogène produit. Enfin, la silice formée après réaction du silicium avec l'eau, selon la réaction (1), peut être recyclée par carbo-thermie ou par électrolyse en sel fondu, avec la possibilité d'utiliser une électricité décarbonée.

Si + 2H₂O → 2H₂ + SiO₂ (1)

L'usage de silicium pour la production massive d'hydrogène a été mis en oeuvre durant la première guerre mondiale par la Royal Air Force. De la soude caustique était utilisée, conduisant à la formation de silicate de sodium sous forme de gel ("water glass").

Les auteurs de la présente invention ont développé une technique de mise en oeuvre de poudres de silicium micrométriques qui, associées à des additifs appropriés et en présence d'eau, permet de produire de l'hydrogène de manière instantanée, avec des rendements qui peuvent être égaux ou supérieurs à 85%, par rapport à la quantité théorique (1,6 litre d'hydrogène normal / g Si).

Les poudres de silicium micrométriques commercialisées ont des particules dont la taille est généralement comprise inférieure ou égale à 150 microns et en particulier inférieure ou égale à 10 microns, selon la normalisation des tamis. Ces particules de silicium se retrouvent naturellement recouvertes d'oxyde, dont l'épaisseur peut atteindre 1,6 nm selon les conditions de stockage, la température et le degré hygrométrique étant des facteurs déterminants ("Oxidation of silicon powder in humid air", Thèse Juin 2012, Anne Marthe Nymark).

La pureté des poudres de silicium couvre un large spectre, de 95% à 99,999%, et le coût du silicium dépend bien sûr de sa pureté, comme de son mode d'obtention.

Dans le cadre de la présente invention, la production d'hydrogène n'est pas affectée par la pureté du silicium.

L'utilisation d'agents de corrosion isotropes du silicium est connue depuis le début des années 60. Ce sont des solutions alcalines, en particulier de potasse, dont l'action sur la cinétique de corrosion du silicium dépend de la concentration en alcali et de la température. Plus la concentration et la température sont élevées, plus la vitesse de corrosion est importante, comme le démontrent H. Seidel et al. (Journal of Electrochemical Society, 137, 1990, p. 3626-3622). Plusieurs articles et brevets préconisent l'utilisation de nanoparticules de silicium avec l'objectif de produire de l'hydrogène selon la réaction (1), en utilisant une solution faiblement alcaline (pH ≤ 8,6) (Y. Kobayashi et al. Journal of Nanoparticle Research, 2017, 19 :176, p. 1-9), ou en supprimant toute présence d'alcalis (F. Erobogbo et al. Nano Letters, 2013, 13 (2), p. 451-456).

Toutefois, si la vitesse d'oxydation du silicium augmente lorsque la taille des particules diminue (W.K. Na et al. Materials Science and Engineering, B 163, 2009, pp 82-87), la couche d'oxyde recouvrant les grains ralentit la cinétique de corrosion du silicium. Il faut, pour pallier ce phénomène, broyer le silicium en l'absence d'oxygène et si besoin, effectuer un décapage pour éliminer la couche d'oxyde.

Ces opérations ont un coût.

Ainsi, Y. Kobayashi et al. préconisent-ils d'effectuer un décapage à l'aide d'acide fluorhydrique à 5%, suivi d'un rinçage à l'éthanol, et le brevet US 9751759 décrit quant à lui un procédé de broyage du silicium en présence d'un solvant inerte, pour obtenir des particules inférieures à 250 nm, avec une surface passivée réduite.

Sur la base de ces éléments, plusieurs articles et brevets décrivent l'emploi d'une solution alcaline portée à une température supérieure ou égale à 50 °C, ou même supérieure ou égale à 80°C, afin d'initier la réaction de décomposition de l'eau par le silicium (P. Brack et al. International Journal of Energy Research, 2017, 41, p. 220-228 - brevet US 9751759).

En particulier, le brevet US 9751759 décrit un procédé qui consiste à mélanger des poudres nanométriques de silicium dépassivées, selon des critères spécifiques, et un agent alcalin soluble dans l'eau qui, au contact de celle-ci, libère de la chaleur.

Le broyage de poudres de silicium micrométriques, ainsi amenées à la taille nanométrique, nécessite des équipements complexes, des solvants, des opérations effectuées à l'abri de l'air, et une dépense d'énergie importante, avec un bénéfice en termes de cinétique de production d'hydrogène et de rendement qui n'est pas clairement établi.

La demande internationale publiée sous le numéro WO2011/048685 propose de générer de l'hydrogène à partir :
- d'une poudre composée d'une zéolithe contenant de l'aluminium et du silicium, d'un métal alcalin et d'une poudre de composé à base de calcium
- de charbon actif et
- de siliciure de fer,
dans des proportions déterminées.

La demande de brevet étasunien publiée sous le numéro US 2012/148486 a trait à la production d'hydrogène à partir de magnésium, silicium et un agent de corrosion, d'eau, de sels, le silicium étant cristallin. Comme agents de corrosion sont cités le fer, le nickel, le cobalt, le cuivre et leurs combinaisons. Comme sels, NaCl et KCl sont utilisés dans les exemples.

Le modèle d'utilité allemand publié sous le numéro DE 20 2013 011124 concerne une composition sèche constituée de ferrosilicium, d'oxyde de calcium, un sel ou une combinaison de sels (carbonate, sulfate ou phosphate de sodium), un chlorure de métal alcalin ou alcalino-terreux, un agent de dépassivation (NaCl), avec un rapport CaO/Si = 1 à 6 et un rapport sels/CaO = 0,01 à 5.

La demande de brevet européen publiée sous le numéro EP 3 505 151 (phase européenne de WO2018/037818) a pour objet un matériau produisant de l'hydrogène comprenant des particules de silicium et un milieu physiologiquement acceptable, notamment de l'hydroxyde de sodium ou de potassium. Il ne semble pas y avoir de 3^{ème} composé, à part peut-être un ajusteur de pH (hydrogénocarbonate de sodium) ou un acide organique (acide citrique).

Enfin, la demande de brevet étasunien publiée sous le numéro US 2015/0321911 se rapporte à une composition comprenant une poudre de silicium, une substance alcaline qui est un acide faible d'un métal alcalin (et qui n'est donc pas à proprement parler une substance alcaline...) et un agent de précipitation, ces composés étant présent dans des proportions définies. L'agent de précipitation est un oxyde et/ou un hydroxyde de calcium.

### Exposé sommaire de l'invention

La présente invention propose une mise en oeuvre qui se distingue de l'état de l'art antérieur en ce qu'elle permet une simplification et une baisse de coût des procédés de préparation, à travers la suppression des étapes de réduction des poudres de silicium à la taille nanométrique et/ou de décapage de l'oxyde de silicium de surface, et en évitant de devoir procéder à quelque étape de traitement que ce soit en l'absence d'oxygène.

Plus précisément, l'invention concerne une composition destinée à la production d'hydrogène par décomposition de l'eau, cette composition se distinguant en ce qu'elle comprend :
- une poudre de silicium,
- un agent de corrosion sous forme solide et soluble dans l'eau et
- un additif qui inhibe la réaction spontanée de corrosion de la poudre de silicium au contact de l'agent de corrosion, dans laquelle l'additif inhibiteur est un oxyde métallique choisi dans le groupe constitué par l'oxyde de zinc, et l'oxyde d'étain.

Selon un autre aspect, l'invention a trait à un procédé de production d'hydrogène, dans lequel on met une composition comme décrite ci-dessus en présence d'eau en vue de la production d'hydrogène.

### Exposé détaillé de l'invention

Les présentes divulguent la mise en oeuvre de préparations comprimées de poudre de silicium dont la granulométrie est comprise entre 0 (exclu) et 150 microns (inclus), et de préférence majoritairement entre 0 (exclu) et 50 microns (inclus) pour une meilleure réactivité en présence d'eau. Ces poudres, naturellement passivées à l'air, ne subissent aucun traitement préalable qui viserait à éliminer la couche superficielle d'oxyde de silicium.

Dans le cadre de la présente invention, la poudre de silicium est associée d'une part à un agent de corrosion qui est un hydroxyde alcalin tel que la potasse, la soude ou de l'ammoniaque (car l'ammoniaque n'est pas un hydroxyde alcalin), et d'autre part à un agent inhibant la réaction spontanée de corrosion du silicium par l'agent de corrosion. L'agent de corrosion est de préférence la potasse ou la soude, et est de préférence apporté sous forme solide, en poudre ou granulés. Les trois composants sont mélangés intimement avant compression pour former une préparation comprimée (mode de préparation A).

Sans sortir du cadre de l'invention, et à travers une mise en oeuvre différente, l'agent de corrosion utilisé sous forme de poudre comprimée et/ou sous forme de granulés est mis en oeuvre séparément de la préparation comprimée de poudre de silicium (mode de préparation B).

Les essais et résultats décrits dans ce qui suit sont fournis à titre d'exemples de mise en oeuvre de l'invention, et permettent d'en mesurer l'intérêt.

Les préparations correspondantes ont été réalisées en utilisant une poudre de silicium fournie par la société Alfa Aesar, tamisée à 40 microns, et de la potasse en granulés, lesquels peuvent être légèrement broyés.

Se distinguant de l'art antérieur en termes de simplification de procédé et par là-même de réduction de coût, la mise en oeuvre de la présente invention ne requiert aucun traitement particulier des poudres de silicium ou des poudres ou granulés d'alcalis : suppression des étapes de broyage des poudres de silicium, conduisant à les ramener à la taille nanométrique, et/ou de décapage de l'oxyde de silicium de surface ; pas de traitement en l'absence d'oxygène de l'air.

Quant à l'hydroxyde alcalin, en particulier la potasse, il n'est pas nécessaire de le déshydrater.

### Mode A

On constate au vu du Tableau 1, qu'une préparation comprimée réalisée par mélange de silicium et de potasse réagit immédiatement après compression en prenant feu, probablement par un effet combiné de friction des particules entre elles et de l'expulsion de l'eau lors de la compression suivie par la réhydratation exothermique de la potasse.

Divers additifs susceptibles de fixer l'eau ont été testés, selon le mode de préparation A, mais sans succès, comme le montre le Tableau 1 suivant.

**Tableau 1 (tests comparatifs)**

| Composition de la préparation | | | Stabilité à l'air après compaction |
|---|---|---|---|
| Si | KOH | Additifs | |
| 70% | 30% | -- | Prise de feu |
| 60% | 30% | 10% Ca(OH)₂ | Prise de feu |
| 60% | 30% | 10% TiO₂ | Prise de feu |
| 60% | 30% | 10% Sucrose | Prise de feu |
| 60% | 30% | 10% CMC (*) | Prise de feu |

| | | | |
|---|---|---|---|
| (*) CMC : carboxyméthylcellulose | | | |

Cherchant à éviter la prise de feu spontanée, les auteurs de la présente invention ont alors montré que l'addition d'oxydes métalliques pouvant se transformer en hydroxydes amphotères solubles tels que ceux de zinc, aluminium, plomb, étain, permettaient de bloquer la corrosion immédiate du silicium dans les conditions décrites ci-dessus, évitant ainsi toute prise de feu, tout en permettant ultérieurement la production d'hydrogène lors d'une mise en contact de la préparation avec l'eau.

A titre d'exemple, le Tableau 2 (invention) suivant montre que l'addition de 10% d'oxyde de zinc ou de 10% d'oxyde d'étain à un mélange comprimé de poudres de silicium et de potasse, qui permet de conserver durablement la préparation en la plaçant simplement à l'abri de l'air après sa réalisation, rend possible son utilisation finale pour la production d'hydrogène avec un excellent rendement.

La dissolution de la potasse solide dans l'eau ainsi que la réaction de corrosion du silicium sont exothermiques et favorisent la production d'hydrogène : les températures locales peuvent atteindre 70 à 80°C.

**Tableau 2**

| Composition de la préparation | | | H₂O | Hydrogène | |
|---|---|---|---|---|---|
| Si | KOH | Additifs | ml / g Si | ml / g Si | Rendement |
| 60% | 30% | 10% ZnO | 6 | 1375 | 86% |
| 60% | 30% | 10% SnO₂ | 6 | 1150 | 72% |

L'utilisation de potasse ou de soude conduit à des résultats identiques, pour des concentrations variées, allant de 2 à 50% de la masse globale de la composition.

L'utilisation d'oxydes d'aluminium (sous la forme gamma), de plomb ou d'étain conduit à des résultats similaires. Toutefois, pour des raisons de toxicité, il peut apparaître préférable d'éviter l'utilisation de plomb.

Des résultats comparables ont été obtenus avec les différents oxydes, pour des concentrations variées, allant de 1 à 40% de la masse globale de la composition, ces concentrations pouvant être adaptées en fonction de l'additif utilisé et de la granulométrie de la poudre de silicium.

Il semble que l'on puisse expliquer le blocage de la réaction immédiate du silicium avec la potasse, tel que cela est mis en évidence ci-dessus, par la formation de zincate, aluminate ou stannate de sodium ou de potassium, non totalement solubilisé en raison de la faible quantité d'eau au sein de la pastille, à l'origine du phénomène. Cette couche "passive" serait ensuite dissoute par l'ajout d'eau, permettant ainsi la production d'hydrogène.

### Mode B

Une autre option est de séparer la poudre de silicium et l'agent de corrosion, ce qui écarte tout risque de réaction spontanée, et permet de simplifier le mode de conservation des préparations, qui peut se faire à l'air libre.

En associant, pour la production d'hydrogène, d'une part du silicium comprimé et d'autre part de la potasse comprimée ou en granulés, dans un rapport de masses par exemple de 7/3, l'ajout, à titre d'exemple, de 5,1 ml d'eau par gramme de silicium, on obtient un rendement en hydrogène de seulement 39%, mais bien sûr sans qu'il y ait prise de feu spontanée de la préparation comprimée de silicium (Tableau 3).

**Tableau 3 (comparatif)**

| Compositions comprimées | | H₂O | Hydrogène | |
|---|---|---|---|---|
| Préparation 1 | Préparation 2 | ml / g Si | ml / g Si | Rendement |
| Si | KOH | | | |
| 70% | 30% | 5,1 | 617 | 39% |

Pour augmenter le rendement de production d'hydrogène, les auteurs de la présente invention ont montré qu'il était nécessaire d'ajouter au silicium un additif en présence d'eau. Ils ont alors testé divers additifs possibles : de l'oxyde de zinc déjà utilisé dans le mode A, de la chaux vive, qui est un oxyde alcalino-terreux dont la réaction avec l'eau est très exothermique (63,7 kJ/mole), et de la carboxyméthylcellulose (CMC) de sodium, qui fait partie de la famille des hydrocolloïdes, produits hydrophiles qui réduisent la mobilité de l'eau. Ces expérimentations sont illustrées en Tableau 4 suivant.

On constate que l'oxyde de zinc (invention) et la chaux vive (comparatif) apportent des améliorations du rendement de production d'hydrogène de l'ordre de 15 à 25%, mais qui restent très insuffisantes au regard des objectifs industriels du procédé.

En revanche, l'utilisation d'un hydrocolloïde tel que la CMC (comparatif) modifie profondément le mécanisme réactionnel et conduit à un rendement très élevé, similaire à celui obtenu avec le Mode A de préparation selon l'invention.

**Tableau 4**

| Composition des préparations | | | H₂O | Hydrogène | |
|---|---|---|---|---|---|
| Préparation 1 | | Préparation 2 | ml / g Si | ml / g Si | Rendement |
| Si | Additif | KOH | | | |
| 70% | 5% ZnO | 25% | 5, 1 | 681 | 45% |
| 70% | 5% CaO | 25% | 5, 1 | 771 | 48% |
| 70% | 5% CMC | 25% | 5, 1 | 1413 | 88% |

Afin de vérifier si des combinaisons de ces additifs pouvaient apporter une amélioration à la réaction de corrosion du silicium mis au contact de l'eau, oxyde de zinc et chaux vive (CaO) ont été ajoutés à proportions égales (2,5%) au silicium, de même que la CMC et la chaux vive l'ont été dans une autre série de tests.

Le premier mélange d'additifs (ZnO + CaO) n'apporte pas d'amélioration particulière par rapport à la seule présence de ZnO ou de CaO.

Des mélanges d'additifs du second type (CMC + CaO), comme le montre le Tableau 5 suivant, ne permettent pas non plus d'obtenir une hausse du rendement en hydrogène.

**Tableau 5 (comparatif)**

| Composition des préparations | | | H₂O | Hydrogène Max | |
|---|---|---|---|---|---|
| Préparation 1 | | Préparation 2 | ml / g Si | ml / g Si | Rendement |
| Si | Additif | KOH | | | |
| 70% | 2,5% CMC+ 2,5 % CaO | 25% | 5, 1 | 1372 | 86% |
| 70% | 1,5% CMC+ 3,5 % CaO | 25% | 5, 1 | 1333 | 83% |

Mais, si donc l'addition combinée de poudres de CaO et de CMC dans la préparation 1 ne présente pas d'avantage en termes de rendement en hydrogène, il a été mis en évidence qu'elle permet d'accélérer la cinétique de production d'hydrogène, comme cela apparaît en Tableau 6, cela en liaison avec la chaleur dégagée par la réaction :

CaO + H₂O → Ca(OH)₂

La chaux vive joue le rôle d'un "booster" (stimulateur) thermique.

**Tableau 6 (comparatif)**

| Additifs de la préparation 1 | Pic de vitesse (min) | Vitesse (ml H₂ / g Si / mn) |
|---|---|---|
| 5% CMC | 4,0 min | 183,7 |
| 2,5% CMC + 2,5% CaO | 2,5 min | 327,3 |
| 1,5% CMC + 3,5% CaO | 2,5 min | 334,7 |

On constate donc que le pic de vitesse intervient beaucoup plus tôt lors de l'ajout de CaO à la CMC.

Des résultats comparables ont été obtenus, pour des concentrations variées, pouvant aller, pour la CMC comme pour l'oxyde de calcium de 0,5 à 40% par rapport à la masse globale des composants mis en oeuvre pour la production d'hydrogène par décomposition de l'eau.

Sans vouloir être tenus par une théorie spécifique, les inventeurs pensent qu'il est probable que l'action de la CMC tienne largement à sa capacité à fixer de l'eau, en formant un gel qui stabilise les émulsions, propriété qui permettra à la réaction de corrosion de se poursuivre malgré le dégagement d'hydrogène et la consommation d'eau (réaction 1). Plus largement, les polysaccharides qu'ils soient naturels ou semi-synthétiques remplissent la même fonction que celle de la CMC utilisée dans les tests décrits ci-dessus à titre d'exemples de la présente invention.

Il s'agit plus précisément d'hydrocolloïdes, dont beaucoup sont utilisés dans l'industrie alimentaire. On peut citer à titre d'exemples non-limitatifs de l'invention, les polysaccharides tels que les alginates, le carraghénane et les gommes arabiques, et les dérivés cellulosiques : méthylcellulose, carboxyméthylcellulose et ses sels, hydroxypropylcellulose, hydroxypropylmethylcellulose, ces composés pouvant être utilisés seuls ou en mélange.

Les auteurs de la présente invention ont par ailleurs cherché à s'assurer de l'efficacité des formulations définies dans le cadre de l'invention pour la production d'hydrogène, quel que soit le degré d'oxydation superficielle des grains de silicium.

Pour ce faire, des poudres de silicium, notamment tamisées à 40 microns, ont été placées dans une étuve à température contrôlée à 60°C, dans une atmosphère saturée en eau, pour des durées qui ont varié de 4h30 à 25 jours.

Dans les mêmes conditions que précédemment, cette poudre de silicium stockée à 60°C et 100% d'humidité est utilisée pour réaliser, avec de la poudre de CMC, une première préparation comprimée, stable à l'air.

Les auteurs ont montré que le temps de séjour de la poudre de silicium dans cette atmosphère oxydante ne modifie pas significativement le rendement de la production d'hydrogène obtenu dans les mêmes conditions que précédemment, ce que met en évidence le Tableau 7 suivant.

L'utilisation d'une poudre de silicium micrométrique fortement passivée permet donc, associée et comprimée avec de la poudre de CMC, d'obtenir une production d'hydrogène avec un rendement élevé, supérieur à 80%.

**Tableau 7 (comparatif)**

| | Composition des préparations | | | H₂O | Hydrogène | |
|---|---|---|---|---|---|---|
| Temps de séjour | Préparation 1 | | Préparation 2 | ml / g Si | ml / g Si | Rendement |
| | Si | CMC | KOH | | | |
| 0 (Référence) | 70% | 5% | 25% | 5, 1 | 1413 | 88% |
| 4h30 | 70% | 5% | 25% | 5, 1 | 1419 | 88% |
| 2 Jours | 70% | 5% | 25% | 5, 1 | 1378 | 85% |
| 5 Jours | 70% | 5% | 25% | 5, 1 | 1372 | 85% |
| 12 Jours | 70% | 5% | 25% | 5, 1 | 1387 | 86% |
| 25 Jours | 70% | 5% | 25% | 5, 1 | 1347 | 84% |

On démontre ainsi l'efficacité des formulations de compositions faisant l'objet de la présente invention, au sein desquelles la poudre de silicium ne requiert pas de traitement d'élimination partielle ou totale de la couche de passivation, même si cette poudre est fortement passivée. Dans le cadre de la présente invention, les compositions à base de poudres de silicium ont été assemblées sous forme agglomérée, ce qui offre une grande commodité de manipulation, d'emballage, et de mise en oeuvre finale pour la production d'hydrogène par décomposition de l'eau.

De même, dans le cadre de la présente invention, la potasse seule a été utilisée sous forme agglomérée, pour les mêmes raisons de commodité.

Naturellement, et sans sortir du cadre de la présente invention, ces préparations comprimées peuvent se trouver être désagrégées lors de leur mise en contact avec l'eau pour la production d'hydrogène, ce qui peut notamment résulter des caractéristiques du mode d'introduction des réactifs dans le réacteur ou du choix d'une alimentation dosée finement par injection de poudres.

Les pourcentages de silicium, d'alcali soluble et d'additifs fournis dans les mises en oeuvre mentionnées ci-dessus à titre d'exemples, ainsi que les masses d'eau par rapport au silicium, ne sont en rien limitatifs de la présente invention.

## Revendications

1. Composition destinée à la production d'hydrogène par décomposition de l'eau, comprenant :
- une poudre de silicium et
- un agent de corrosion sous forme solide et soluble dans l'eau,
**caractérisée en ce qu'**elle comprend en outre au moins un additif qui inhibe la réaction spontanée de corrosion de la poudre de silicium au contact de l'agent de corrosion, cet additif inhibiteur étant choisi parmi l'oxyde de zinc et l'oxyde d'étain.

2. Composition selon la revendication 1, dans laquelle l'additif inhibiteur est l'oxyde de zinc.

3. Composition selon l'une des revendications 1 et 2, dans laquelle le pourcentage dudit additif inhibiteur par rapport à la masse de la composition est compris entre 1% et 40%.

4. Composition selon la revendication 3, dans laquelle le pourcentage de l'additif inhibiteur est compris entre 5% et 15% de la masse de la composition.

5. Composition selon l'une des revendications 1 à 4, dans laquelle la poudre de silicium est non dépassivée, aucun traitement chimique ou mécanique qui aurait pour objet d'éliminer partiellement ou totalement la couche superficielle d'oxyde de silicium n'ayant été appliqué.

6. Composition selon l'une des revendications 1 à 5, dans laquelle la poudre de silicium présente une granulométrie inférieure ou égale à 150 microns.

7. Composition selon l'une des revendications 1 à 6, dans laquelle l'agent de corrosion est constitué de potasse et/ou de soude.

8. Composition selon la revendication 7, dans laquelle le pourcentage massique de l'agent de corrosion par rapport à la masse de l'ensemble des composants mis en oeuvre pour la décomposition de l'eau est compris entre 2% et 50%.

9. Procédé de production d'hydrogène, **caractérisé en ce qu'**on met une composition selon l'une des revendications 1 à 8 en présence d'eau en vue de la production d'hydrogène.

## Patentansprüche

1. Zusammensetzung, bestimmt zur Herstellung von Wasserstoff durch Zersetzung von Wasser, umfassend:
- ein Siliziumpulver und
- ein Korrosionsmittel in fester und wasserlöslicher Form,
**dadurch gekennzeichnet, dass** sie außerdem mindestens ein Additiv aufweist, das die spontane Korrosionsreaktion des Siliziumpulvers bei Kontakt mit dem Korrosionsmittel inhibiert, wobei das inhibitorische Additiv aus Zinkoxid und Zinnoxid ausgewählt ist.

2. Zusammensetzung nach Anspruch 1, wobei das inhibitorische Additiv Zinkoxid ist.

3. Zusammensetzung nach einem der Ansprüche 1 und 2, wobei der Prozentsatz des inhibitorischen Additivs, bezogen auf die Masse der Zusammensetzung, zwischen 1 % und 40 % liegt.

4. Zusammensetzung nach Anspruch 3, wobei der Prozentsatz des inhibitorischen Additivs zwischen 5 % und 15 % der Masse der Zusammensetzung liegt.

5. Zusammensetzung nach einem der Ansprüche 1 bis 4, wobei das Siliziumpulver nicht depassiviert ist, wobei keine chemische oder mechanische Behandlung zur teilweisen oder vollständigen Entfernung der Oberflächenschicht aus Siliziumoxid angewendet wurde.

6. Zusammensetzung nach einem der Ansprüche 1 bis 5, wobei das Siliziumpulver eine Korngröße von 150 Mikrometern oder weniger aufweist.

7. Zusammensetzung nach einem der Ansprüche 1 bis 6, wobei das Korrosionsmittel aus Pottasche und/oder Soda gebildet ist.

8. Zusammensetzung nach Anspruch 7, wobei der Massenanteil des Korrosionsmittels an der Masse aller für die Wasserzersetzung eingesetzten Komponenten zwischen 2 % und 50 % liegt.

9. Verfahren zur Herstellung von Wasserstoff, **dadurch gekennzeichnet, dass** man eine Zusammensetzung nach einem der Ansprüche 1 bis 8 in Gegenwart von Wasser zur Herstellung von Wasserstoff bringt.

## Claims

1. A composition for the production of hydrogen by decomposition of water, comprising :
- a silicon powder and
- a corrosion agent in solid and water-soluble form,
**characterised in that** it also comprises at least one additive which inhibits the spontaneous corrosion reaction of the silicon powder on contact with the corrosion agent, this inhibiting additive being chosen from zinc oxide and tin oxide.

2. A composition according to claim 1, in which the inhibiting additive is zinc oxide.

3. Composition according to one of claims 1 and 2, in which the percentage of said inhibitor additive based on the mass of the composition is between 1% and 40%.

4. Composition according to claim 3, in which the percentage of inhibitor additive is between 5% and 15% of the mass of the composition.

5. Composition according to one of claims 1 to 4, in which the silicon powder is not depassivated, no chemical or mechanical treatment having the purpose of partially or totally removing the surface layer of silicon oxide having been applied.

6. Composition according to one of claims 1 to 5, in which the silicon powder has a particle size of less than or equal to 150 microns.

7. Composition according to one of claims 1 to 6, in which the corrosion agent consists of potassium hydroxide and/or sodium hydroxide.

8. Composition according to claim 7, in which the percentage by mass of corrosion agent based on the mass of all the components used for decomposing water is between 2% and 50%.

9. Process for the production of hydrogen, **characterized in that** a composition according to one of claims 1 to 8 is placed in the presence of water with a view to the production of hydrogen.
